# EUROPEAN PATENT APPLICATION

(11) **EP 0 845 654 A1**
(43) Date of publication of application: **03.06.1998**
(21) Application number: 96203416.1
(22) Date of filing: 02.12.1996
(51) Int. Cl.: G01B 7/02, F15B 15/28, B62D 15/02

(54) **Position sensor, particularly for the rod of cylinder-piston units**

(71) Applicant: Ognibene S.p.A., 42100 Reggio Emilia (IT)
(72) Inventor: Arduini, Marco, 42100 Reggio Emilia (IT)
(74) Representative: Corradini, Corrado

(57) **Abstract**

A device for measuring the axial position of a cylindrical rod relative to a fixed reference point, in which the cylindrical rod has at least one portion of its surface inclined to its axis, a mechanical transducer being coupled to said inclined portion to measure its distance at one point from the rod axis so as to deduce the position of the rod relative to the transducer, wherein the rod is a conical rod having a taper of at least 0° 0' 5" along at least a part of its length, the transducer consisting of a ring mounted as an interference fit on the rod and slidable relative thereto, and provided with circumferential deformation measurement means, the signal from which is a function of the position of the rod relative to the transducer.

## Description

This invention relates to a device for measuring the axial position of a cylindrical body, such as the rod of a cylinder-piston unit, relative to a fixed reference point.

In devices operated by a cylinder-piston unit, the extent of operation of the device, which is a function of the axial position of the unit rod, is required to be known in many cases.

As an indicative non-exclusive example of said requirement, reference will be made to power steering devices, which operate a vehicle steering system assisted by a hydraulic cylinder-piston unit generally of the through rod type.

Said unit consists of a cylinder within which there slides under sealed conditions a piston fixed on a rod which sealedly emerges from both ends of the cylinder.

The unit is a double-acting unit, ie the pressurized hydraulic fluid can be fed to either end of the cylinder, to operate the rod in both directions.

As the rod is connected to the steering system, the position of the piston within the cylinder is indicative of the degree of steering of the vehicle wheels, which has to be indicated to the driver especially in the case of large site vehicles, in order to prevent false manoeuvres.

It is therefore necessary to be able to sense the instantaneous piston position, which is equivalent to the axial rod position.

This problem has already been solved in the known art by various systems, which generally comprise a magnetic connection between a plate, or other magnetic means, rigid with the cylinder, and similar means rigid with the piston.

Other essentially mechanical known means are based on a position transducer acting on the rod, and connected to an encoder or another similar device.

The present invention relates specifically to position sensors comprising a mechanical position transducer.

Known mechanical transducers have a defect in that they are sensitive to even minimal movements due to simple deformation to which the rod is subjected in a radial direction, such movements irremediably falsifying the measurement.

An object of the invention is to provide a means for sensing the axial position of a rod, for example the rod of a cylinder-piston unit, which is insensitive to the small radial movements to which said rod is subjected by reaction to external loads.

A further object of the invention is to provide a position sensor which does not interfere with the operability of the cylinder-piston unit, as it can be applied external thereto.

A further but no less important object of the invention is to provide a position sensor which can also be applied to existing cylinder-piston units, and to cylindrical rods not forming part of cylinder-piston units.

All the aforesaid objects are attained according to the invention by a slight taper provided on the rod in combination with a ring slidingly mounted as an interference fit on the rod, said ring comprising means for measuring its circumferential deformation.

According to the invention a convenient rod taper is at least 0° 0' 5".

The circumferential deformation of the ring caused by interference with the rod taper is a theoretically linear, and in practice substantially linear, function of the relative movement between the ring and rod in an axial direction.

It is not influenced by any rod oscillation due to flexural deformation induced by external loads.

Deviations of the effected measurements from linearity can be easily corrected, if necessary, by calibration.

The ring deformation, measured for example by suitable known extensometers, forms the input to a calculation system which converts it into linear movement on the basis of the system geometrical parameters.

The merits and operational and constructional characteristics of the invention will be apparent from the detailed description of a particular embodiment of the invention applied to a power steeering system, given hereinafter by way of non-limiting example with reference to the figures of the accompanying drawings.
Figure 1 is a schematic illustration of the power steering device with the invention applied;
Figure 2 is an enlarged view of the end of the cylinder-piston unit which operates the poswer steering, according to the invention;
Figure 3 is a further enlarged view of the deformable ring acting as the mechanical position transducer;
Figure 4 is a section on the line IV-IV of Figure 3;
Figure 5 is a block diagram of the invention.

Said figures show the steered wheels 1 of a vehicle, not shown, which are connected in the usual manner, via a series of levers indicated overall by 2, to the rod 31 of a cylinder-piston unit 3, the cylinder 32 of which is connected to the vehicle frame 200.

The rod 31 is of through type, it being connected at its centre to the piston 33 which sealedly slides within the cylinder, and at its ends to the steering levers.

The ends of the cylinder 32 are closed by two endpieces 34 and 35 through which the rod 31 passes, it being sealed by usual ring gaskets 35.

Each of the endpieces 34 and 35 comprises a hole 37, 38 for feeding/discharging the hydraulic liquid to/from one and the other side of the piston 33.

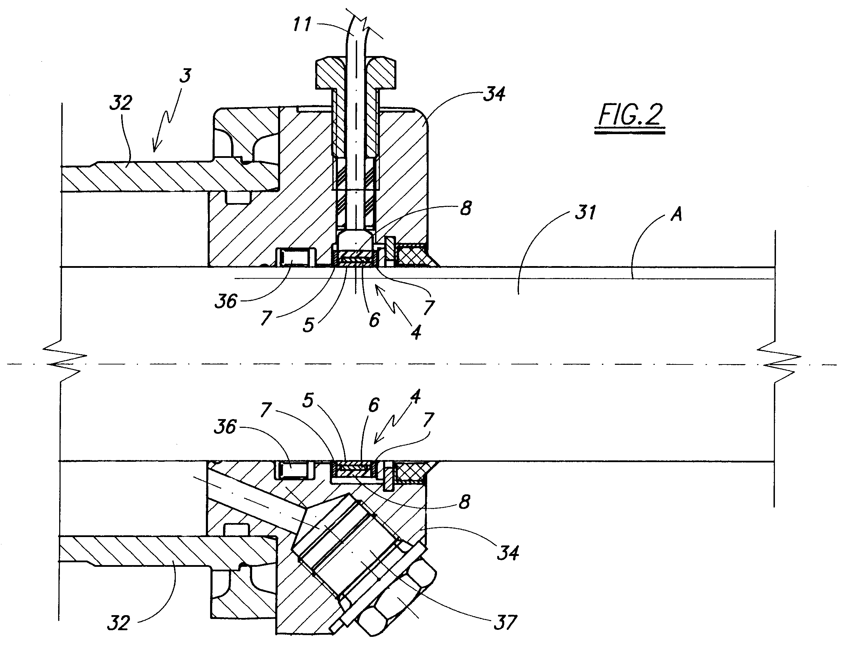

The endpiece 34 also comprises an inner circumferential groove arranged to receive as an exact fit a metal ring 5 provided with extensometers 6 (see Figure 2).

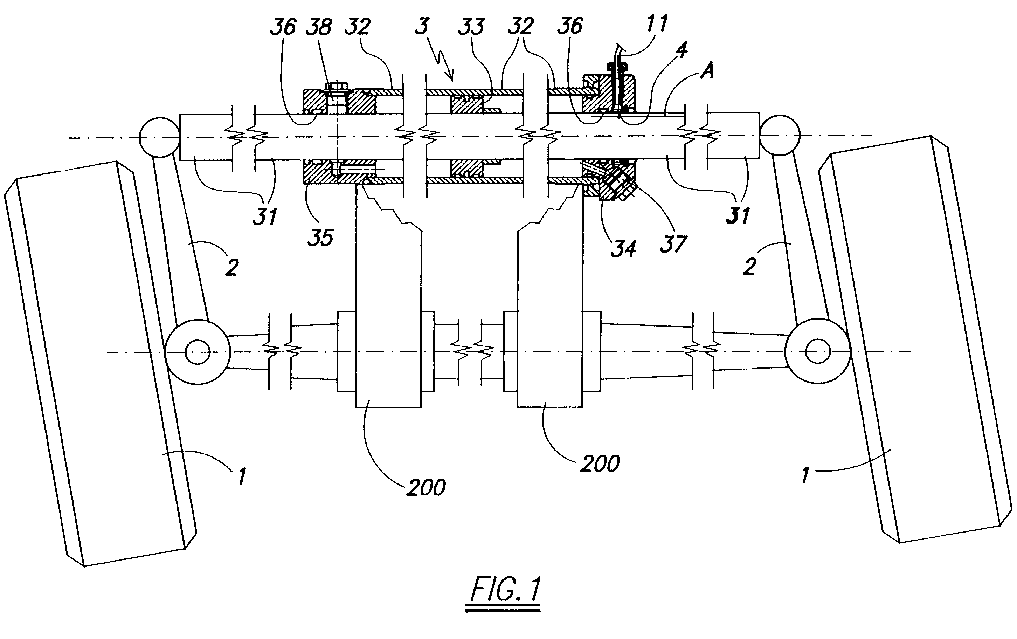

In the illustrated example, the rod diameter is 42.00 mm, and has a taper of 0° 1' along a length of 300 mm, indicated by A in Figure 1.

The ring 5 has an inner diameter of 41.98 mm, an axial length of 7.50 mm and a thickness of 3.00 mm, it being constructed of hardened and tempered 38NiCrMo4 nickel-chromium-molybdenum steel.

On the ring periphery there are fixed in equidistant positions four extensometers 6, having the following characteristics:
- resistance: 350 ohms
- thermal coeff: 11 ppm per G° (steel-type creep)
- creep type K or O
- grid size 3x3 mm
- gluing by heat-reacting adhesives
- waterproofing by resin with -70, +120 ramps.

The ring 5 is located between two small flanges 7 containing the waterproofing resin 8.

The extensometers are connected to form two diametrically opposing half-bridges, with two extensometers per half-bridge.

The end-of-scale position is regulated in hybrid manner using low TC Manganin/nickel resistors.

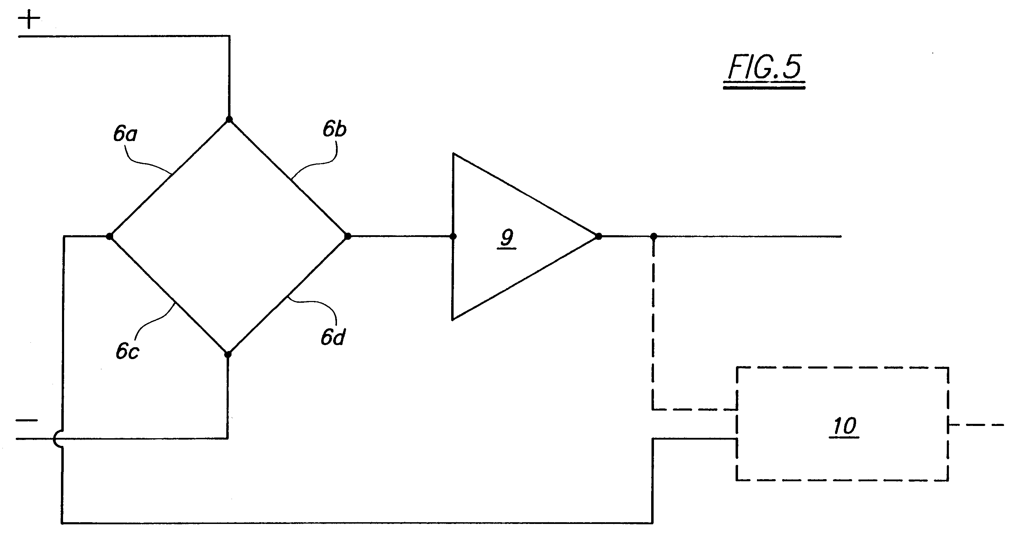

The connection of the extensometers is shown schematically in Figure 5, in which they are indicated by 6a, 6b, 6c, 6d.

In the same figure the reference numeral 9 indicates an amplifier and 10 indicates a microprocessor which processes the data originating from the extensometers, converting them into axial movements of the rod.

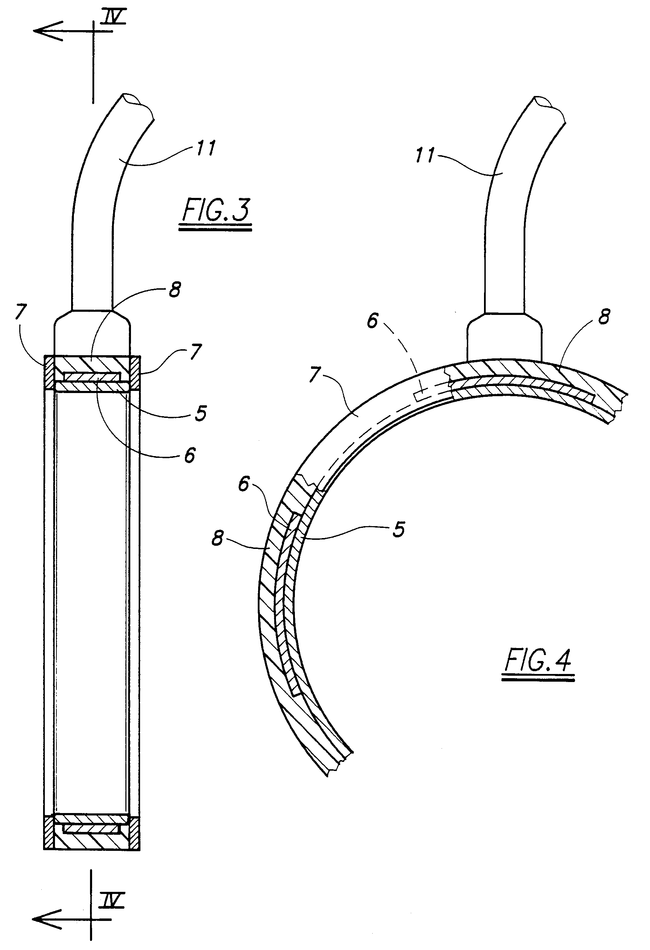

The feed lines for the bridge formed by the extensometers 6a, 6b, 6c, 6d all leave the device through the cable 11 shown in Figure 3.

A detailed description of the electronic circuit is omitted, as it is of normal implementation for an expert of the art.

By virtue of the invention it is possible to make very precise measurements free of errors which could be induced by possible radial forces applied to the rod, with consequent radial movements thereof.

The invention is not limited to the preferred embodiment heretofore described, and modifications and improvements can be made thereto without leaving the scope of the ensuing claims.

## Claims

1. A device for measuring the axial position of a cylindrical rod relative to a fixed reference point, in which the cylindrical rod has at least one portion of its surface inclined to its axis, a mechanical transducer being coupled to said inclined portion to measure its distance at one point from the rod axis so as to deduce the position of the rod relative to the transducer, characterised in that the rod is a conical rod having a taper of at least 0° 0' 5" along at least a part of its length, the transducer consisting of a ring mounted as an interference fit on the rod and slidable relative thereto, and provided with circumferential deformation measurement means, the signal from which is a function of the position of the rod relative to the transducer.

2. A measuring device as claimed in claim 1, characterised in that the means for measuring circumferential deformation of the ring are four extensometers applied externally to the ring to form two diametrically opposing half-bridges, hybrid end-of-scale adjustment being provided by low TC Manganin/nickel resistors.
